(19) **Europäisches Patentamt / European Patent Office / Office européen des brevets**

(11) **EP 1 541 993 B1**

(12) **EUROPEAN PATENT SPECIFICATION**

(45) Date of publication and mention of the grant of the patent:
**30.07.2008 Bulletin 2008/31**

(51) Int Cl.:
**G01N 21/64** *(2006.01)*     **G01N 15/14** *(2006.01)*

(21) Application number: **04029200.5**

(22) Date of filing: **09.12.2004**

(54) **Fluorescent beads detecting method and apparatus**

Methode und Vorrichtung zum Nachweis von fluoreszierenden Teilchen

Méthode et dispositif de détection de particules fluorescentes

(84) Designated Contracting States:
**DE FR GB**

(30) Priority: **12.12.2003 JP 2003415376**

(43) Date of publication of application:
**15.06.2005 Bulletin 2005/24**

(73) Proprietor: **HITACHI SOFTWARE ENGINEERING CO., LTD.**
**Yokohama-shi, Kanagawa 230-0045 (JP)**

(72) Inventors:
• **Oshida, Yoshitada**
**Ebina-shi**
**Kanagawa 243-0488 (JP)**
• **Kishida, Hiroshi**
**4-12-7, Higashishinagawa**
**Tokyo 140-0002 (JP)**

(74) Representative: **Liesegang, Roland**
**FORRESTER & BOEHMERT**
**Pettenkoferstrasse 20-22**
**80336 München (DE)**

(56) References cited:
WO-A-03/093795     US-B1- 6 288 220
US-B1- 6 396 053     US-B1- 6 592 822
US-B1- 6 632 655

• OLSON R J ET AL: "An automated submersible flow cytometer for analyzing pico- and nanophytoplankton: FlowCytobot" DEEP SEA RESEARCH. PART 1. OCEANOGRAPHIC RESEARCH PAPERS, PERGAMON PRESS, OXFORD, vol. 50, no. 2, February 2003 (2003-02), pages 301-315, XP004558215 ISSN: 0967-0637
• HOWARD M. SHAPIRO: "Practical Flow Cytometry" 1995, WILEY - LISS , NEW YORK , XP002329738 * page 10 * * page 149 - page 150 *

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to a method and an apparatus for detecting fluorescence emitted from a sample having a plurality of beads arranged in a flow path to include fluorescent substance on or in the beads.

BACKGROUND OF THE INVENTION

As a useful and efficient method for checking a state of appearance of genes, there has been started to use DNA probe arrays or DNA chips having many DNA probes classified by their types and fixed on a surface of a solid member. In JP-A. No. 243997/1999 described below, there has been disclosed an invention about a probe array in which some particles (probe particles) having various probes fixed thereto and arrayed under a specified order. More practically, a plurality of fine tubes or grooves filled with each of the probe particles are arranged side by side, each of the particles is poured into another fine tube or groove one by one from each of the fine tubes or grooves so as to make the probe array having various probe particles always arranged under a specified order, the probe arrays are used and several kinds of probes are connected to the particles having different particle diameters through the probe arrays and then several kinds of fluorescent marker DNAs are concurrently measured.

In the technology described in the patent document above, it is possible to fix the bio-molecules to be analyzed to the surfaces of the beads and analyze them by a method wherein the capillary beads array in which some beads with various kinds of probe particles being fixed to their surfaces are arranged in a flow path such as a glass capillary under a desired order is manufactured, sample solution containing bio-molecules to be analyzed is fed to the capillary beads array, the bio-molecules to be analyzed are fixed to the surfaces of the beads and the bio-molecules are coupled to the probe molecules having a high affinity.

When the bio-molecules with the beads are analyzed, fluorescent substance is added to some unknown targets such as DNA, protein and immunity, substances having already-known substances composed of one type to a plurality of types of substances adhered to the surfaces of the beads are put into a flow path having a larger inner diameter than the diameter of the beads under a predetermined order. Although a certain combination of the already-known substances at the surfaces of the beads and the un-known substances added with fluorescent substance shows that they are coupled to each other, another combination except the former one shows that they are not coupled to each other. Accordingly, if the beads radiating the excitation light and emitting the fluorescent light are acknowledged, a substance to be inspected is acknowledged. When the substance in which the un-known object to be inspected having the aforesaid fluorescent substance added thereto is dissolved in liquid such as water is flowed into the flow path, this solution flows fast in a narrow space between the beads and the flow path wall, resulting in that the aforesaid coupling reaction is produced rapidly and so a problem found in this type of inspection that the reaction time is long can be solved.

As described above, although it is advantageous for the method for using the fluorescent beads to promote the reaction, the beads are not arranged in a linear form because the beads in the flow path have a smaller diameter as compared with an inner diameter of the flow path. Due to this fact, it was difficult to perform an accurate detecting operation when the arranged beads are detected through fluorescence. That is, if a large diameter spot beam is radiated against the beads for radiating the excitation light positively against the fluorescent beads according to the prior art method, the excitation light is also radiated against the adjoining beads and a discrete detection for every beads is not performed well. In addition, in turn when a small spot beam was radiated inversely against the beads, this showed a problem that certain beads were radiated with beam against a high position near the central portions and other certain beads were radiated against a surrounding deep position and a quantitative detection could not be attained.

A method according to the preamble of claim 1 and an apparatus according to the preamble of claim 6 are known from US-B1-6 592 822 and Olson R J et. al.: "An automated submersible flow cytometer for analyzing pico- and nanophytoplankton: FlowCytobot" DEEP SEA RESEARCH. PART 1 OCEANOGRAPHIC RESEARCH PAPERS, PERGAMON PRESS, OXFORD, Vol. 50, No. 2, February 2003 (2003-02), pages 301-315, XP004558215 ISSN: 0967-0637.

SUMMARY OF THE INVENTION

In order to solve the aforesaid prior art problem found in detecting the fluorescent beads, the present invention provides a method and an apparatus according to the independent claims.

First, the present invention is an invention of a method for detecting fluorescent beads according to claim 1.

It is preferable that a length of the excitation light in a longitudinal direction is smaller than a diameter of sectional area perpendicular to a flowing direction of the flow path and larger than a value by times of 0.3 of the beads diameter. With this arrangement as above, it becomes possible to radiate the excitation light against the fluorescent beads more positively without radiating the excitation light against the adjoining beads.

Further, either the aforesaid excitation light or a position detecting beam having a specified positional relation with the aforesaid excitation light guides a light reflected at the beads to a light position detector, determines a timing for detecting fluorescence based on the position signal detected by the light position detector to cause the fluorescence to be detected. With such an arrangement as above, it becomes possible to detect fluorescence while taking a time in which the excitation light is radiated onto a top part of each of the beads to enable the fluorescence to be detected and further an accurate, i.e. a quantitative fluorescence detection to be carried out.

Further, when the fluorescence generated through radiation of the excitation light is separately detected from the excitation light, it is preferable to use at least one excitation light-fluorescence separation means from among three units of a wavelength selection beam splitter, a spatial filter and an interference filter. In order to determine whether any one type, any two types, or all the types of the means are used, the means is selected according to a precision to be required or its cost.

In order to detect accurately a time in which the excitation light radiates against the top parts of the beads, it is necessary for only the reflected light from the beads to be caught. Due to this fact, it is preferable that as either the excitation light or the position detecting beam, a light linearly polarized through a polarizer used at a light source for a linear polarized light or a light source for non-polarized light is applied through the polarized light beam splitter and the wavelength plate. That is, the excitation light passes through P-polarization at the polarization beam splitter in a going light path directing toward the beads, becomes an S-polarized light through an intermediate wavelength plate, in particular, 1/4 wavelength plate at a returning path where the light reflects against the beads and returns, the light reflects at the polarized beam splitter and incident to the light position detector. With such an arrangement as above, all the lights becoming noise component reflected at the surface of the optical system placed between the polarized beam splitter and the wavelength plate pass through the polarized beam splitter, do not reach to the light position detector, resulting in that a positional detection with a less amount of noise can be carried out. In this case, the lowest noise can be attained if the aforesaid 1/4 wavelength plate occupies a location between an objective lens and the beads.

Employing the aforesaid method enables a quite high precise fluorescent detection to be carried out. However, in order to restrict the noise more and perform a high precise detection, it is preferable to arrange the fluorescent beads including the aforesaid fluorescent at its surface or inside it and dummy beads not including the fluorescent substance at its surface or inside it or fluorescent beads including different kinds of fluorescent substances under a specified order. If such a sample is used, it becomes possible to remove almost of all noises generated from the adjoining beads.

Secondly, the present invention is an invention of fluorescent beads detecting apparatus applied in the aforesaid fluorescent beads detecting method and defined by claim 6.

It is preferable that the fluorescence beads detecting apparatus of the present invention is set such that the aforesaid lighting optical system and the detecting optical system have a common objective lens.

In addition, it is preferable that the aforesaid beam splitter is a polarized beam splitter in the same manner as that of the first invention and a 1/4 wavelength plate is installed between the aforesaid objective lens and the beads.

In addition, as the aforesaid excitation light-fluorescent branch means, it is preferable to select and use at least one type of excitation light-fluorescent separating means in reference to the excitation light-fluorescent separating means from among three units of wavelength selection beam splitter, spatial filter and interference filter.

Further, it is preferable that the fluorescent detector device of the present invention is provided with a driving means for changing a relative position between the aforesaid fluorescent beads and the excitation light.

The present invention has enabled a sample having fluorescence applied to the beads to be easily and accurately detected with fluorescence and further enabled a convenient and less-expensive inspection to be carried out.

BRIEF DESCRIPTION OF THE DRAWINGS

Fig. 1 shows a preferred embodiment of the present invention;
Fig. 2 shows an item to be detected when the beads are detected according to the present invention;
Fig. 3 shows a detail of an item to be detected when the beads are detected according to the present invention;
Fig. 4 shows a preferred embodiment of a beam forming optical system;
Fig. 5 is an illustration for showing a position sensor used for performing beads detection;
Fig. 6 is an illustration for showing a detecting signal for use in detecting beads detection according to the present invention;
Fig. 7 shows another preferred embodiment of the present invention;
Fig. 8 shows a still another preferred embodiment of the present invention; and
Fig. 9 shows a further still another preferred embodiment of the present invention.

DETAILED DESCRIPTION OF THE PREFERRED EMBODIMENTS

Referring now to the drawings, some preferred embodiments of the present invention will be described in detail.

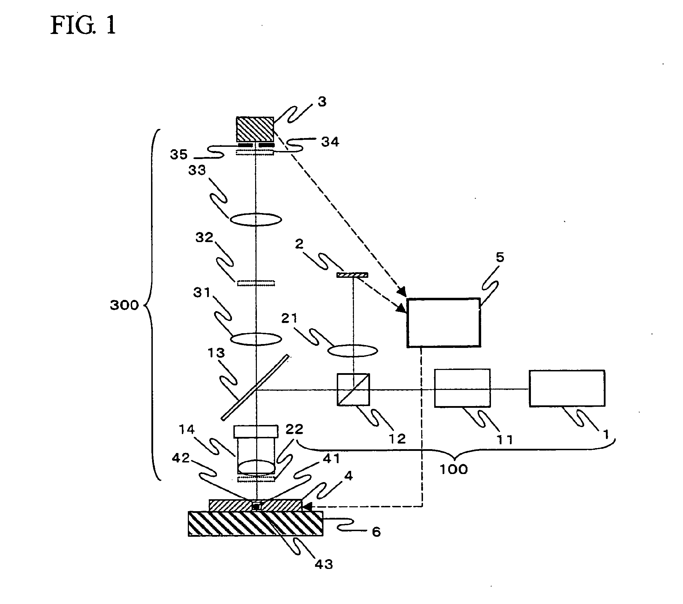

Fig. 1 shows one preferred embodiment of the present invention. An excitation light source 1 is an excitation light source for use in detecting fluorescence. Although this is usually a laser light source where a beam having a high directivity can be attained, an electrical discharging type light source may also be applicable. A laser beam forming optical system 11 radiates an optical beam emitted from the light source 1 under a desired shape against beads 41 acting as an inspected item or a measured item to be described later. When the excitation light attained by the light source 1 is a linear polarized light, it is preferable to use a polarized beam splitter as a beam splitter 12. The light passed through either the beam splitter or the polarized beam splitter is incident to a wavelength selection beam splitter 13. The wavelength selection beam splitter 13 reflects the excitation light and causes a fluorescence to pass through the splitter. After passing through an objective lens 14, the excitation light radiates against fluorescent substances on or in a plurality of beads 41 (dummy beads are designated by 42).

The fluorescent substances radiated with the excitation light emitted through the aforesaid radiating optical system 100 generate fluorescent light. The generated fluorescent light passes through the objective lens 14, shows a transmission through the wavelength selection beam splitter 13 and then the generated fluorescent light is detected by the fluorescent light detector 3 in a system 300 composed of units for guiding the fluorescent light to the fluorescent light detector 3. A detected fluorescent signal $S_L$ is transmitted to a signal processing circuit 5 and an intensity of fluorescent light is detected accurately by a method to be described later.

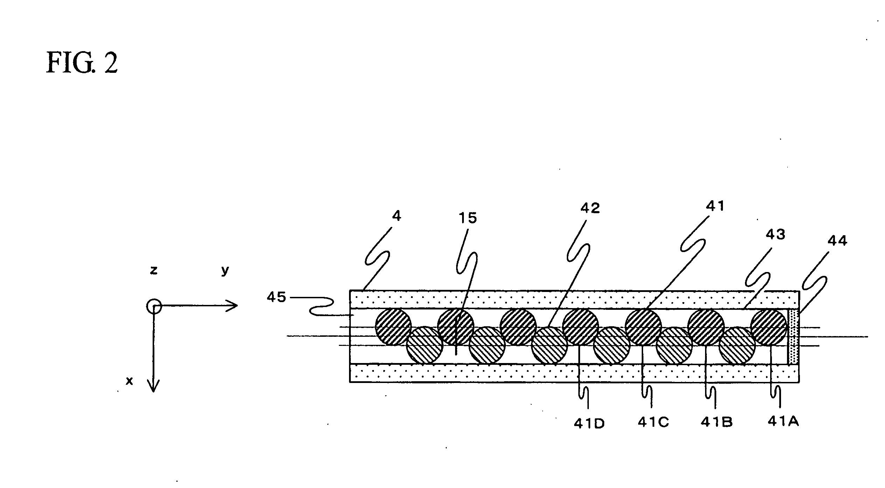

In Fig. 2 is illustrated a state of arrangement of the fluorescent beads in the flow path. In this preferred embodiment, the beads 41 of which surfaces have already been processed and non-processed usual beads 42 are arranged alternatively in such a way that the targets to be inspected such as DNA, protein or antibodies added with fluorescent substances are coupled to each other. As a result, the liquid becoming the target to be inspected such as DNA, protein or antibodies added with fluorescent substances flows along the flow path flowing from the left side to the right side as seen in Fig. 2, the liquid forms a large stream in a y-direction while becoming a disturbed flow near the beads, resulting in that the DNA, for example, of the aforesaid inspected item is efficiently hybridized on the surface processed beads.

The processed beads 41 that may be connected to the inspected items will be further processed such that the substances to be connected for every type of several kinds of DNA, protein or antibodies or the like are adhered to the beads surfaces in compliance with each of the items. Only at least the number of beads processed in this way are prepared and the beads are practically installed in such a way that they may be arranged in the flow path shown in Fig. 2 under a predetermined order, i.e. 41 A, 41B, 41C and 41D.... A location of the end bead 41 A is fixed with a stopper 44 having several small holes made to cause liquid to be passed.

Additionally, in order to increase a signal-to-noise ratio for detection of the adjoining inspected beads, some dummy beads 42 are arranged to hold the inspected beads. An excitation light emitted from the light source 1 such as an excitation light 15 shown in Fig. 2 passes through the beam forming means 11 and the objective lens 14 to radiate onto the beads in such a shape as one in which it is long in an x-direction perpendicular to a large flow y-direction in the flow path.

A stage 6 shown in Fig. 1 that can be moved mounts a sample having some beads arranged in the flow path and the stage can be moved in at least y-direction through a mechanism, not shown. Since the stage receives an instruction issued by a control circuit 5 to move in beads arrangement direction, the excitation light 15 scans the arranged beads in sequence and radiates thereto.

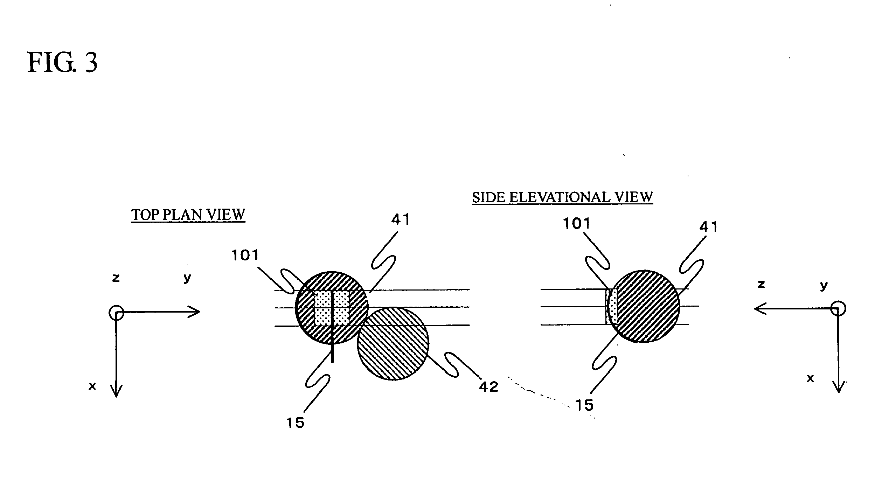

Fig. 3 is an enlarged view for showing the bead and the excitation light 15 for use in radiating against the bead. They are adjusted such that a center of the excitation light in its longitudinal direction and a center of the groove may coincide to each other. A width W of the groove and a bead diameter D have a following relation of:

$$W/2 < D \leq W$$

and they are arranged such that an order of the beads may not be disturbed.

In addition, it is desirable that a length L of the excitation light in its longitudinal direction has a following relation so as to cause the locations near their top portions may always be radiated even if the beads are arranged in a zigzag form. That is, detection of an area 101 on the bead shown in Fig. 3 reduces interference with a detection of the adjoining beads and causes a sufficient detection area to be assured. In Fig. 3, although the dummy beads are arranged alternately, when the dummy beads are not present, but when there are provided all the meaningful beads contributing to the detection, it becomes important to arrange the detection area shown in Fig. 3 for eliminating any influence of interference of the adjoining beads.

It is assumed that a length of the detection area 101 in a scanning direction in Fig. 3 is designated by Ly and a length of the excitation light in its longitudinal direction is designated by Lx. The value Ly will be determined by a method to be described later. In this case, the value Lx will be described. The value Lx is less than the width W of the groove. Even if the length is made to be longer than this value, fluorescence detection intensity becomes relatively low, resulting in that this variation provides no meaning at all. To the contrary, when the width W of the groove is set to be substantially equal to the bead diameter D, it would be satisfactory to set a width more than 1/3 of the bead diameter. Setting the value Lx to an excessive low value under a condition in which the groove width W is larger than the bead diameter D causes the excitation light not to enable the center of the bead to be radiated and a detection precision is reduced.

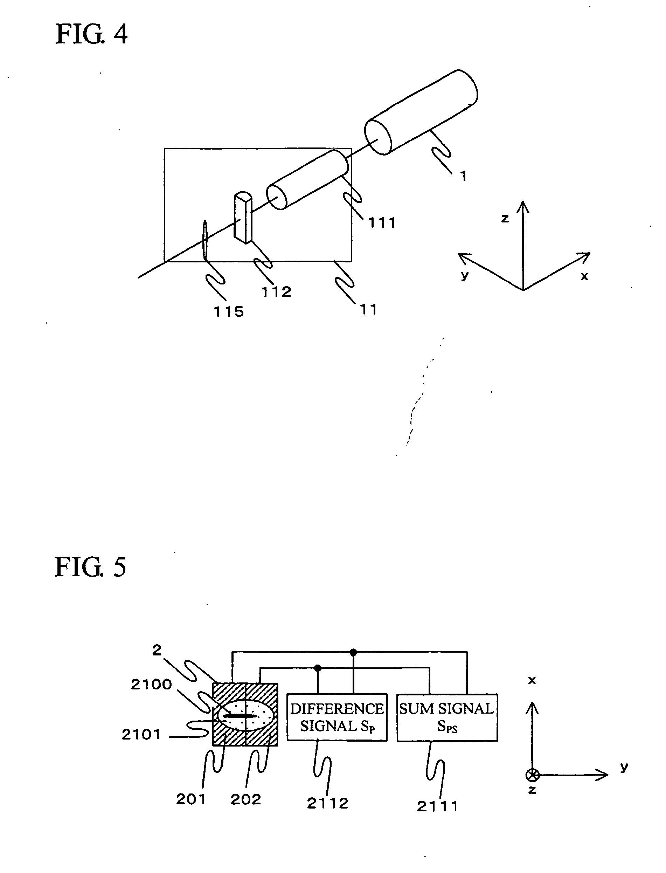

In Fig. 4 is illustrated a configuration of the beam forming optical system 11 shown in Fig. 1. In Fig. 4, a laser beam emitted from the laser light source 1 has a diameter of about 1 mm, so that a beam diameter is expanded from several millimeters to several tens of millimeters through a beam expander 111. The expanded beam shows that a longitudinal direction of a spot near a focal point 115 of a cylindrical lens 112 keeps a length ranging from several millimeters to several tens of millimeters and its narrow direction is narrowed to about sub-millimeters through the cylindrical lens. This focal point position occupies a substantial conjugate positional relation with the top point of the inspected bead through the objective lens. Accordingly, the laser beam passed through the beam forming optical system 11 radiates a fine excitation light elongated in a direction perpendicular to a direction of groove onto the beads.

The excitation light passed through the beam forming optical system is absorbed by the fluorescent substance added to the beads to generate fluorescence. The generated fluorescence passes through the objective lens, passes through the wavelength selection beam splitter and the fluorescence is detected by a high sensitivity light detector 3 through lenses 31, 33. The high sensitivity light detector is set such that a photo-diode and a photo-multi-processor and the like are selected according to an intensity of the detected light intensity. The front surface of the high sensitivity light detector is provided with a slit aperture at a location where it is conjugate with surfaces of the beads so as to cause only a fluorescence emitted from the location where excitation light radiates to be detected.

The interference filter 34 shown in Fig. 1 is used when a sufficient removal of excitation light cannot be attained only through the wavelength selection beam splitter. Almost of all the excitation light do not reach to the high sensitivity light detector due to this filter. Further, in order to eliminate either a reflection of the excitation light from the groove bottom part of the bead samples or the lid surface of the groove or some optical parts such as lenses in the midway part of the light path and fluorescence, there is sometimes provided a noise elimination spatial filter for use in eliminating these noises.

The excitation light for use in radiating against the beads in its fine elongated form returns back to its light path from which the excitation light came. Accurate detection of the location where the beads are radiated with the light could be carried out by applying the method described below. That is, the returning excitation light reflected by the wavelength selection beam splitter shown in Fig. 1 is curved upwardly in its light path by the beam splitter 12, passes through the lens 21 and then the light is received by the position sensor 2.

Fig. 5 illustrates architecture of the position sensor 2. The position sensor 2 is separated into two detector elements 201, 202 at its central part and then a light intensity detected at each of the right and left light receiving surfaces is independently calculated. The light 2100 having the excitation light normally reflected at the bead surfaces and directly incident to the position sensor and the light 2101 or the like reflected at the location other than that of the beads are incident to the receiving surfaces. As shown in Fig. 1 or Figs. 2, 3, although the light 2100 normally reflected at the beads and returned back is a fine illuminating light elongated in an x direction, it is elongated in the y direction on the position sensor because the position sensor and the bead surfaces have a Fourier conversion relation. The two elements 201, 202 of the position sensor are arranged in this longitudinal direction.

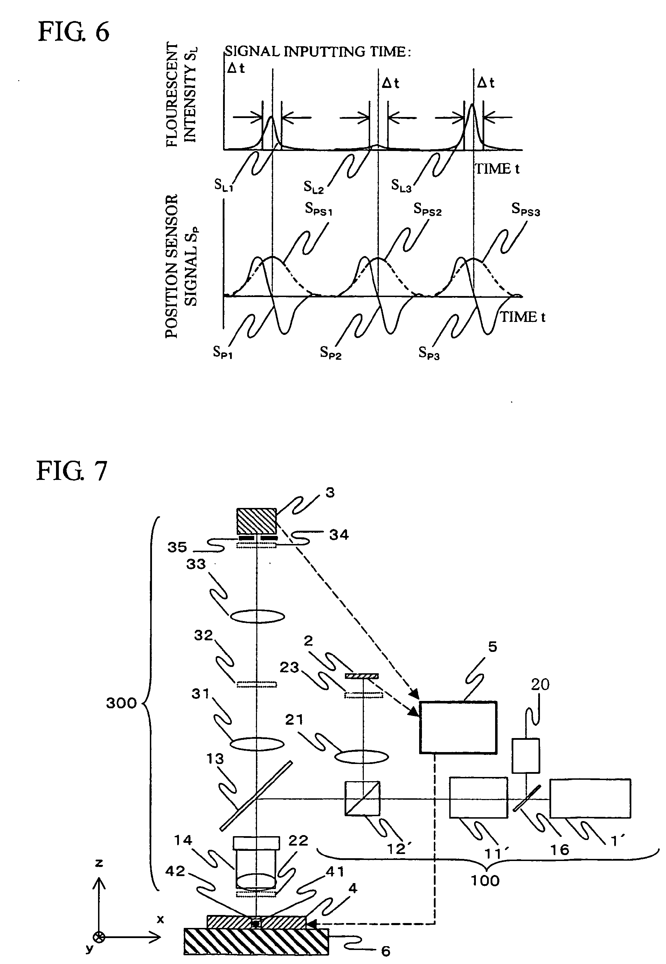

When the fine elongated excitation light radiates against the top parts of the beads, i.e. their centers, the excitation light normally reflected with the beads is set such that a center of the distribution of intensity comes to an intermediate position between the two elements 201, 202 of the position sensor. When the excitation light is displaced from the top portions of the beads to the direction of +y and radiated, the light is shifted toward the two elements 201 of the position sensor and received, resulting in that when the light is displaced in -y direction, the light is shifted to the element 202. With such a configuration as above, as shown in Fig. 6, a difference signal Sp and a sum signal $S_{PS}$ can be attained through a relative scanning of the excitation light and the beads as shown in a lower graph in Fig. 6 through a circuit for attaining the difference signal Sp and the sum signal $S_{PS}$ in reference to the detected signals of the two elements 201, 202.

A waveform shown at the lower graph of Fig. 6 is generated. The excitation light is scanned in a relative manner, and a time in which the light passes near the center of the beads as described below can be made apparent in reference to the difference signals $S_{P1}$, $S_{P2}$ and $S_{P3}$ and the sum signals $S_{PS1}$, $S_{PS2}$ and $S_{PS3}$. That is, a timing in which the signals $S_{PS1}$, $S_{PS2}$ and $S_{PS3}$ are more than a certain level and the signals $S_{P1}$, $S_{P2}$ and $S_{P3}$ become 0 is detected by a processing circuit. Fluorescence detection intensities between time widths $\Delta t$ before and after this time are multiplied.

Since a fluorescence detection intensity is detected in a waveform as indicated by the upper graph in Fig. 6, the fluorescent signals $S_{L1}$, $S_{L2}$ and $S_{L3}$ are detected by the high intensity light detector 3 at a timing having the highest fluorescent detection between the times $\Delta t$, i.e. at a location where the excitation light radiates against a part near the upper portions of the beads, resulting in that a quite accurate fluorescent detection can always be carried out. The fluorescent intensity of each of the beads can be obtained when the fluorescent detection signals $S_L$ are accumulated in sequence in a memory, a plurality of data corresponding to the time widths $\Delta t$ determined mainly based on an address in the memory when the center of the beads is detected are taken out and their sums are taken.

In the foregoing description, although there has been described that the beam splitter shown in Fig. 1 is applied as a usual beam splitter, some advantages using a polarized beam splitter will be described as a preferred embodiment. The polarized beam splitter 12 is set such that a polarizing direction of the linear polarization of the laser light source 1 is a z direction. Since the laser beam of the linear polarization is incident to the polarized beam splitter 12 as a P polarization, the beam may pass through it by approximately 100%. After the linear polarization of the passed S-polarization passes through the objective lens 14, it passes through 1/4 wavelength plate 22 to become a circular polarization, radiates against the beads and when the reflected light passes again through the 1/4 wavelength plate 22 from an opposite direction, it is changed into an S-polarization and returns back to the polarization beam splitter 12. The linear polarization of this S-polarization is reflected by the polarization beam splitter by approximately 100% and reaches to the position sensor 2.

With such an optical system having the aforesaid configuration, all the light reflected at the surface of the optical system present between the polarization beam splitter and the 1/4 wavelength plate and returned back to the position sensor as noise pass through the polarized beam splitter and do not reach to the position sensor. Due to this fact, light becoming noise does not enter into the position sensor and it becomes possible to detect accurately a time in which the excitation light passes through the center of each of the beads and further a high precise detection of fluorescent can be carried out.

Fig. 7 illustrates another preferred embodiment of the present invention. The component elements in Fig. 7 having the same reference numbers as those shown in Fig. 1 denote the same component elements. In this preferred embodiment, as a light source 1', an electrical discharging lamp such as a mercury lamp is used. In the beam forming optical system 11', a fine elongated sight view diaphragm (1 15 in Fig. 4) is inserted into a position in conjugate with a position of each of the beads in addition to the cylindrical lens for use in forming a fine elongated beam. A laser light source 20 for accurately setting a center of the bead is separately arranged because a directivity of the excitation light cannot be attained like that of the laser beam. The light emitted from this laser light source is weak as compared with that of the excitation light, and its wavelength is long. In addition, its wavelength is a long wavelength different from a fluorescence wavelength in the way that it may not become a noise at the time of fluorescent detection. With such an arrangement as above, even if a directivity of the excitation light is not well, the center of the bead can be set accurately and the fluorescence of the bead can be accurately detected in the same manner as that in the preferred embodiment described above in reference to Fig. 1.

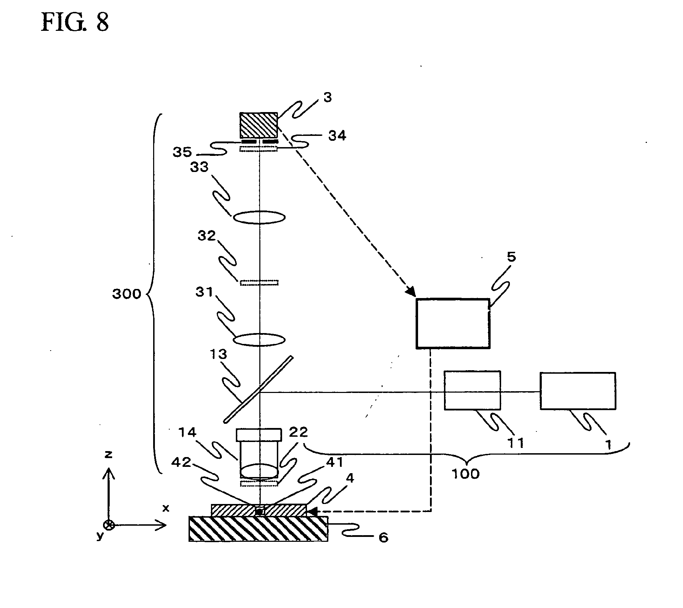

Fig. 8 shows a still another preferred embodiment of the present invention. The same reference numbers as those shown in Fig. 1 denote the same component elements. In this preferred embodiment, although a shape of the excitation light on the bead is not different from that illustrated in the aforesaid preferred embodiment, a position of the regular reflected light is not carried out. That is, a detection timing for the bead is determined under application of only the detecting signal of the high sensitivity light detector 3. When the number of beads is less or the arrangement of the beads is in a regular form or the fluorescence more than a certain degree can be detected from the beads and the like, the detection can be attained only through application of the fluorescence detection signal.

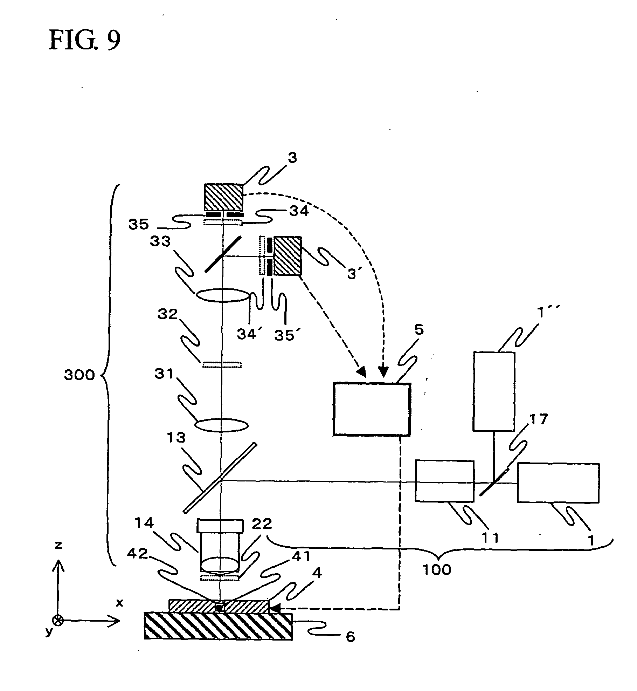

Fig. 9 shows a still further preferred embodiment of the present invention. In this preferred embodiment, as the excitation light, the excitation lights having more than two types of wavelength are applied. The light source 1 is a light source with a wavelength of 635 nm and the light source 1' is a light source with a wavelength of 532 nm. A wavelength selection splitter 17 synthesizes these lights having two different wavelengths. The beam forming optical system 11 causes both lights to be changed into a fine elongated shape on the beads. Since the beads are added with more than two kinds of fluorescence, each of the fluorescent substances may absorb much amount of excitation light with the corresponding excitation light to emit fluorescence. Accordingly, the produced fluorescence is reflected and passed according to each fluorescence by the wavelength selection beam splitter 36 and detected by the high sensitivity light detectors 3, 3' corresponding to each of the fluorescence, thereby a plurality of fluorescence can be separately detected. It is naturally to say in this case that the most-preferable interference filters 35, 35' are applied in compliance with a wavelength of each of the fluorescence.

According to the present invention, it becomes possible to detect fluorescence easily and accurately against the sample having some beads added with fluorescent substances, becomes possible to perform a convenient and less-expensive inspection and so the beads may become an effective tool for a user participated in research and development in the filed of a life science. It is certain that the present invention may contribute to a development in the field of the life science and a development in medical diagnosis or medicines and the like.

## Claims

1. A fluorescence beads detecting method for radiating an excitation light to beads including on or in the beads fluorescent substances arranged in a flow path to detect fluorescence emitted from the beads (41), wherein the excitation light radiated to the beads has a shape having different horizontal to vertical ratio, a longitudinal direction of the shape is directed in a direction perpendicular to a larger flow in a flow path as compared with a short direction, positions on the beads to which the excitation light radiates are relatively changed in sequence, the fluorescence generated through radiation of the excitation light is detected, being separated from the excitation light and a desired fluorescent signal is attained,

**characterized in that**

light reflected at the beads is guided to a light position detector (2) to detect a position signal, wherein said reflected light is either the excitation light or a position detecting beam keeping a certain position in relation with the excitation light, and a fluorescence detection timing in which the excitation light passes near the center of the bead is determined based on the position signal detected by the light position detector, and the fluorescence is detected based on the fluorescence detection timing.

2. The fluorescent beads detecting method according to claim 1, wherein when fluorescence generated through radiation of the excitation light is detected, being separated from the excitation light, at least one type of excitation light-fluorescence separating means is applied from among three units of a wavelength selection beam splitter, a spatial filter and an interference filter.

3. The fluorescent beads detecting method according to claim 1 or 2, wherein the excitation light linearly polarized through application of a poiarizer to either a light source of linear polarized light or a light source of non-polarized light to be incident to the light position detector by applying the polarized beam splitter and the wavelength plate in a state where the light reflected by the beads has a superior efficiency and has a less amount of noise light.

4. The fluorescent beads detecting method according to claim 3, wherein the wavelength plate is a 1/4 wavelength plate and is arranged between an optical system facing against the beads and the beads.

5. The fluorescent beads detecting method according to any one of claims 1 and 2 to 4, wherein there is provided a sample in which the fluorescent beads including the fluorescent substances on or in the beads, dummy beads not including any fluorescent substances on or in the beads and the fluorescent beads including different kinds of fluorescent substances are arranged in a certain order.

6. A fluorescent beads detecting apparatus for radiating an excitation light to beads including on or in the beads fluorescent substances arranged in a flow path and detecting the fluorescence emitted from the beads, comprising:

an exciting light source (1);
a beam forming optical system (100) capable of forming light beams emitted from the light source (1) in a shape having a different horizontal to vertical ratio on the fluorescent beads (41) and suitable for directing a long direction of the shape toward a direction perpendicular to a large flow in the flow path as compared with that of the short direction when the apparatus is in operation;
a wavelength selection beam splitter (13) for either reflecting or passing light depending on a difference in wavelength between the excitation light or a position detecting beam keeping a certain position in relation with said excitation light and the fluorescence to separate the excitation light or position detecting beam from the fluorescence;
a radiation optical system (14) for radiating the excitation light passed through a beam splitter (12) to the beads (41) including at the surfaces or inner portions the fluorescent substance acting as detected item on or in the beads;
a detecting optical system (300) for detecting the fluorescence emitted from the fluorescent substance;
a fluorescent detector (3) for detecting fluorescence passed through the detecting optical system, **characterized by**
a position detector (2) for detecting a position where the beads (41) are radiated with the excitation light based on the excitation light or the position detecting beam reflected from the beads to generate a position signal; and
a control circuit for determining a fluorescence detection timing in which the excitation light passes near the center of the bead based on the position signal obtained by the position detector and for attaining information of the fluorescent beads (41) based on the fluorescence detection timing and information obtained from the fluorescent detector (3).

7. The fluorescent detecting apparatus according to claim 6, wherein the lighting optical system (100) and the detecting optical system (300) are a common objective lens.

8. The fluorescent detecting apparatus according to claim 7, wherein the beam splitter is a polarized beam splitter (12), and a 1/4 wavelength plate (22) is installed between the objective lens (14) and the beads (41).

9. The fluorescent detecting apparatus according to claim 6, wherein at least one type of excitation light-fluorescent separating means from among a spatial filter and an interference filter (34) is provided.

**10.** The fluorescent detecting apparatus according to any one of claims 6 to 9, wherein there is provided a driving means for displacing a relative position between the fluorescent beads and the excitation light.

**Patentansprüche**

**1.** Fluoreszenzteilchen-Detektionsverfahren zum Bestrahlen von Teilchen, auf denen oder in denen sich fluoreszente Substanzen befinden und die in einem Strömungsweg angeordnet sind, mit Anregungslicht, um Fluoreszenz zu detektieren, die von den Teilen (41) emittiert wird,
wobei das Anregungslicht, welches auf die Teilchen eingestrahlt wird, eine Form mit einem ungleichen Verhältnis zwischen der Horizontalen und Vertikalen aufweist, wobei eine Längsrichtung der Form in eine Richtung gerichtet ist, die senkrecht zu einem größeren Fluss in dem Flussweg ist, verglichen mit einer kurzen Richtung, wobei Positionen auf den Teilchen, auf die das Anregungslicht gestrahlt wird, sequentiell relativ verändert werden, und wobei die Fluoreszenz, die durch die Strahlung des Anregungslichts erzeugt wird, getrennt von dem Anregungslicht detektiert wird und ein erwünschtes Fluoreszenzsignal erhalten wird, **dadurch gekennzeichnet, dass** Licht, welches von den Teilchen reflektiert wird, in einen Lichtpositionsdetektor (2) geführt wird, um ein Positionssignal zu detektieren, wobei das reflektierte Licht entweder das Anregungslicht oder ein Positions-Detektionsstrahl ist, welcher eine bestimmte Position in Bezug auf das Anregungslicht beibehält, und ein Fluoreszenzdetektions-Timing, zu dem das Anregungslicht einen Bereich in der Nähe der Mitte des Teilchens passiert, basierend auf einem von dem Lichtpositionsdetektor detektierten Positionssignal bestimmt wird, und die Fluoreszenz basierend auf dem Fluoreszenzdetektions-Timing detektiert wird.

**2.** Fluoreszenzteilchen-Detektionsverfahren nach Anspruch 1, bei dem, wenn die durch die Bestrahlung des Anregungslichts erzeugte Fluoreszenz, die von dem Anregungslicht getrennt ist, detektiert wird, zumindest eine Art von den folgenden Anregungslicht-Fluoreszenz-Trennungsmittel verwendet wird: Wellenlängenauswahl-Strahlteiler, räumlicher Filter und/oder Interferenzfilter.

**3.** Fluoreszenzteilchen-Detektionsverfahren nach Anspruch 1 oder 2, bei dem das Anregungslicht, welches durch Anwendung eines Polarisators auf entweder eine Lichtquelle linear polarisierten Lichts oder eine Lichtquelle nicht-polarisierten Lichts linear polarisiert ist, auf den Lichtpositionsdetektor einfallen gelassen wird, indem ein Strahlteiler für polarisiertes Licht und eine Wellenlängenplatte in einem Zustand zur Anwendung gebracht werden, in dem Licht, welches von den Teilchen reflektiert wird, eine überlegene Effizienz und ein geringeres Maß an Rauschlicht aufweist.

**4.** Fluoreszenzteilchen-Detektionsverfahren nach Anspruch 3, bei dem die Wellenlängenplatte eine ¼-Wellenlängen-Platte ist und zwischen einem optischen System, welches den Teilchen zugewandt ist, und den Teilchen angeordnet ist.

**5.** Fluoreszenzteilchen-Detektionsverfahren nach einem der Ansprüche 1 und 2 bis 4, wobei eine Probe vorgesehen ist, in der in einer bestimmten Ordnung Fluoreszenzteilchen, in oder auf denen fluoreszente Substanzen vorhanden sind, Dummy-Teilchen, in oder auf denen sich keine fluoreszenten Substanzen befinden, und Fluoreszenzteilchen, die unterschiedliche Arten von Fluoreszenzteilchen enthalten, angeordnet sind.

**6.** Fluoreszenzteilchen-Detektionsvorrichtung zum Einstrahlen von Anregungslicht auf Teilchen, in oder auf denen sich fluoreszente Substanzen befinden und die in einem Flussweg angeordnet sind, und zum Detektieren der von den Teilchen emittierten Fluoreszenz, umfassend:

eine Anregungslichtquelle (1);
ein optisches Strahlformungssystem (100), das geeignet ist, Lichtstrahlen, die von der Lichtquelle (1) emittiert werden, in eine Form zu formen, die auf den fluoreszenten Teilchen (41) ein ungleiches Verhältnis zwischen Horizontaler und Vertikaler aufweist und geeignet ist, eine lange Richtung der Form, verglichen mit der kurzen Richtung, in eine Richtung zu richten, die senkrecht zum großen Fluss in dem Flussweg ist, wenn die Vorrichtung in Betrieb ist;
einen Wellenlängen-Auswahl-Strahlteiler (13), um Licht entweder zu reflektieren oder durchzulassen, in Abhängigkeit von einem Unterschied in der Wellenlänge zwischen dem Anregungslicht oder einem Positionsdetektionsstrahl, welcher eine bestimmte Position bezüglich des Anregungslichts beibehält, einerseits und der Fluoreszenz andererseits, um das Anregungslicht bzw. den Positionsdetektionsstrahl von der Fluoreszenz zu trennen;
ein optisches Bestrahlungssystem (14) zum Einstrahlen des Anregungslichtes, welches durch einen Strahlteiler (12) gelangt ist, auf die Teilchen (41), bei denen sich an den Oberflächen oder im Inneren die fluoreszente Substanz befindet, die als detektierter Gegenstand auf bzw. in den Teilchen wirkt;
ein optisches Detektionssystem (300) zum Detektieren der Fluoreszenz, welche von der fluoreszierenden Substanz emittiert wurde;
einen Fluoreszenzdetektor (3) zum Detektieren der Fluoreszenz, die das optische Detektionssystem passiert hat, **gekennzeichnet durch** einen Positionsdetektor (2) zum Detektieren einer Position, an der die Teilchen (41) mit Anregungslicht bestrahlt werden, basierend auf dem Anregungslicht oder dem Positionsdetektionsstrahl, das bzw. der von den Teilchen reflektiert wurde, um ein Positionssignal zu erzeugen; und eine Steuerschaltung zum Bestimmen eines Fluoreszenzdetektions-Timings, zu dem das Anregungslicht einen Bereich in der Nähe der Mitte des Teilchens passiert, basierend auf dem Positionssignal, welches von dem Positionsdetektor erhalten wird, und zum Erhalten von Information der Fluoreszenzteilchen (41), basierend auf dem Fluoreszenzdetektions-Timing und Information, die von dem Fluoreszenzdetektor (3) erhalten wurde.

7. Fluoreszenz-Detektionsvorrichtung nach Anspruch 6, bei der das optische Beleuchtungssystem und das optische Detektionssystem (300) eine gemeinsame Objektivlinse gebildet umfassen.

8. Fluoreszenz-Detektionsvorrichtung nach Anspruch 7, bei der der Strahlteiler ein Strahlteiler (12) für polarisierte Strahlen ist und eine ¼-Wellenlänge-Platte (22) zwischen der Objektivlinse (14) und den Teilchen (41) installiert ist.

9. Fluoreszenz-Detektionsvorrichtung nach Anspruch 6, bei der mindestens eine Art von Anregungslicht-Fluoreszenz-Trennmitteln vorgesehen ist, die durch einen räumlichen Filter und/oder einen Interferenzfilter (34) gebildet sind.

10. Fluoreszenz-Detektionsvorrichtung nach einem der Ansprüche 6 bis 9, bei der ein Antriebsmittel zum Verstellen einer relativen Position zwischen den Fluoreszenzteilchen und dem Anregungslicht vorgesehen ist.

## Revendications

1. Procédé de détection de billes fluorescentes en projetant une lumière d'excitation vers des billes comprenant sur ou dans les billes des substances fluorescentes disposées dans un trajet d'écoulement pour détecter la fluorescence émise par les billes (41), dans lequel la lumière d'excitation projetée vers les billes a une forme présentant des dimensions horizontale et verticale différentes, la direction la plus longue de la forme est dirigée dans une direction perpendiculaire au sens d'écoulement, les positions des billes vers lesquelles la lumière d'excitation est projetée sont relativement séquentielles, la fluorescence produite par le rayonnement de la lumière d'excitation est détectée, en étant séparée de la lumière d'excitation, et un signal de fluorescence souhaité est obtenu,
**caractérisé en ce que** :

la lumière réfléchie sur les billes est guidée vers un détecteur de position de lumière (2) pour détecter un signal de position, la lumière réfléchie étant ou bien la lumière d'excitation ou bien un faisceau de détection de position conservant une certaine position par rapport à la lumière d'excitation, et
un instant de détection de fluorescence auquel la lumière d'excitation passe près du centre de la bille est déterminé en fonction du signal de position détecté par le détecteur de position de lumière, et
la fluorescence est détectée en fonction de l'instant de détection de fluorescence.

2. Procédé de détection de billes fluorescentes selon la revendication 1, dans lequel, lorsque la fluorescence produite par le rayonnement de la lumière d'excitation est détectée, de façon séparée de la lumière d'excitation, on applique au moins un type de moyen de séparation entre la lumière d'excitation et la fluorescence parmi trois éléments comprenant une séparatrice à sélection de longueur d'onde, un filtre spatial et un filtre interférentiel.

3. Procédé de détection de billes fluorescentes selon la revendication 1 ou 2, dans lequel la lumière d'excitation est polarisée linéairement par l'application d'un polariseur ou bien à une source de lumière polarisée linéaire ou bien à une source de lumière non polarisée incidente sur le détecteur de position de lumière en appliquant la séparatrice de lumière polarisée et une lame d'épaisseur liée à longueur d'onde dans un état où la lumière réfléchie par les billes a une intensité optimale et un minimum de bruit optique.

4. Procédé de détection de billes fluorescentes selon la revendication 3, dans lequel la lame d'épaisseur liée à longueur d'onde est une lame quart d'onde et est disposée entre un système optique situé en face des billes et les billes.

5. Procédé de détection de billes fluorescentes selon l'une quelconque des revendications 1 et 2 à 4, dans lequel on prévoit un échantillon dans lequel les billes fluorescentes comprenant les substances fluorescentes sur ou dans les billes, des billes témoins ne comprenant pas de substances fluorescentes sur ou dans les billes et les billes fluorescentes comprenant différentes sortes de substances fluorescentes sont agencées dans un certain ordre.

**6.** Dispositif de détection de billes fluorescentes projetant une lumière d'excitation vers des billes comprenant sur ou dans les billes des substances fluorescentes disposées dans un trajet d'écoulement et détectant la fluorescence émise par les billes, comprenant :

une source de lumière d'excitation (1) ;
un système optique de formation de faisceau (100) apte à former des faisceaux lumineux émis par la source lumineuse (1) avec une forme présentant des dimensions horizontale et verticale différentes sur les billes fluorescentes (41), et apte à diriger la direction la plus longue de la forme dans une direction perpendiculaire au sens d'écoulement lorsque le dispositif est en fonctionnement ;
une séparatrice à sélection de longueur d'onde (13) pour réfléchir ou laisser passer la lumière en raison de la différence de longueur d'onde entre la lumière d'excitation ou un faisceau de détection de position conservant une certaine position par rapport à la lumière d'excitation et à la lumière de fluorescence pour séparer la lumière d'excitation ou le faisceau de détection de position la lumière de fluorescence ;
un système optique de projection (14) pour projeter la lumière d'excitation qui est passée par une séparatrice (12) vers les billes (41) comprenant en surface ou de façon interne une substance fluorescente servant d'élément détecté sur ou dans les billes ;
un système optique de détection (300) pour détecter la fluorescence émise par la substance fluorescente ;
un détecteur de fluorescence (3) pour détecter la fluorescence qui est passée dans le système optique de détection, **caractérisé en ce qu'**il comprend :

un détecteur de position (2) pour détecter la position à laquelle les billes (41) reçoivent le rayonnement de la lumière d'excitation en fonction de la lumière d'excitation ou de la position du faisceau de détection réfléchi par les billes pour produire un signal de position ; et
un circuit de commande pour déterminer un instant de détection de fluorescence où la lumière d'excitation passe à proximité du centre de la bille par rapport au signal de position obtenu par le détecteur de position et pour obtenir des informations concernant les billes fluorescentes (41) en fonction de l'instant de détection de fluorescence et d'informations obtenues à partir du détecteur de fluorescence (3).

**7.** Dispositif de détection de fluorescence selon la revendication 6, dans lequel le système optique d'éclairage (100) et le système optique de détection (300) comportent un objectif commun.

**8.** Dispositif de détection de fluorescence selon la revendication 7, dans lequel la séparatrice est une séparatrice de polarisation (12), et dans lequel une lame quart d'onde (22) est disposée entre l'objectif (14) et les billes (41).

**9.** Dispositif de détection de fluorescence selon la revendication 6, dans lequel est prévu au moins un type de moyen de séparation entre fluorescence et lumière d'excitation parmi un filtre spatial et un filtre interférentiel (34).

**10.** Dispositif de détection de fluorescence selon l'une quelconque des revendications 6 à 9, comportant un moyen d'entraînement pour modifier la position relative entre les billes fluorescentes et la lumière d'excitation.

FIG. 1

FIG. 2

EP 1 541 993 B1

FIG. 3

TOP PLAN VIEW

SIDE ELEVATIONAL VIEW

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11243997 A

- US 6592822 B1

### Non-patent literature cited in the description

- An automated submersible flow cytometer for analyzing pico- and nanophytoplankton: FlowCytobot. **OLSON R J.** DEEP SEA RESEARCH. PART 1 OCEANOGRAPHIC RESEARCH PAPERS. PERGAMON PRESS, February 2003, vol. 50, 301-315